# EUROPEAN PATENT SPECIFICATION

(11) **EP 4 545 811 B1**
(45) Date of publication and mention of the grant of the patent: **02.12.2026**
(21) Application number: 23205312.4
(22) Date of filing: 23.10.2023
(51) Int. Cl.: F16B 19/06, B21J 15/02, F16B 19/08, F16B 5/04

(54) **RIVET AND METHOD FOR PRODUCING A RIVET CONNECTION**
NIET UND VERFAHREN ZUR HERSTELLUNG EINER NIETVERBINDUNG
RIVET ET PROCÉDÉ DE FABRICATION D'UN ASSEMBLAGE PAR RIVET

(43) Date of publication of application: 30.04.2025
(73) Proprietor: Newfrey LLC, New Britain, CT 06053 (US)
(72) Inventor: BARTIG, Paul, 35394 Gießen (DE); STOCK, Maximilian, 35394 Gießen (DE); WISSLING, Matthias, 35394 Gießen (DE)
(74) Representative: SBD IPAdmin

(56) References cited:
- DE-B4- 102014 000 623
- US-A- 5 680 690
- US-A1- 2007 196 632
- US-A1- 2016 123 362

## Description

The present invention relates to a rivet, notably a self-piercing rivet, and a method for producing a rivet connection, notably a punch rivet connection.

In the field of fastening technology, it is known to make joints using rivets. Especially in the field of automotive engineering, rivet connection, notably self-piercing riveting method using a self-piercing rivet, have been well-established for years, particularly in body manufacture.

In high-volume production it is preferred to move the fastening tools adapted to set the rivet within a workpiece arrangement by means of a programmable handling device, such as a robot. In this case it is likewise preferred for the rivets to be fed to a fastening tool attached to a robot arm. To this end, it is known to connect the fastening tool to a feeding device and to use a magazine arrangement for accommodating a plurality of rivets. One rivet of the plurality of rivets from the magazine arrangement is moved to the fastening tool in order to be punched within a workpiece arrangement.

Usually, the workpiece arrangement comprises an upper component and a lower component to be fastened. The upper and lower components are clamped and the self-piercing rivet held by the fastening tool is punched into the workpiece arrangement. A shaft of the self-piercing rivet pierces and penetrates the upper component. When the shaft of the self-piercing rivet penetrating the upper component enters the lower component and the lower surface of the lower component comes into contact with the bottom of a die, the bottom of the die cavity pushes back the lower component. As a result, a hollow shaft of the self-piercing rivet receives a reaction force from the lower component and opens in a ring shape in the lower component without fully penetrating the lower component. A mechanical interlock is formed by opening the shaft of the self-piercing rivet, and the upper component and the lower component are mechanically fastened.

The number of components to be fastened may be two, three or more. Eventually, the rivet may be fastened in only one component. For example, in the case of three components, at least the uppermost component is fully penetrated, and the lowermost component is not fully penetrated. In the production of automobiles, an adhesive is often applied between the components to be fastened in order to improve the performance with regard to load bearing capacity, crash stability, improved corrosion resistance, and Noise, Vibration, Harshness (NVH).

Although rivets, and more particularly self-piercing rivets are well-known and widely used, there is a constant need to improve such fasteners in order to provide reliable, easy to use and to manufacture rivets.

Document EP2470799A1 for instance discloses a punch rivet adapted to be set in a workpiece arrangement of at least two workpieces.

Such rivets are generally coated to provide a corrosion protection and anti-friction performances.

Prior art document DE 10 2014 000 623 B4 discloses a self-piercing rivet which has a corrosion protection layer which is covered by a top layer which allows to adjust setting characteristics as friction and material flow.

US2007196632 discloses an anti-friction coating adapted for fastener (and notably rivets) with a metal or alloy layer, over which a conversion coating layer is formed and a composite coating layer overlaying the conversion coating layer. The composite coating layer includes one or more lubricants.

US2016123362A1 discloses a rivet designed to be spot welded to a workpiece by an electrode.

However, there is still a need to improve the current fasteners and provide a rivet which ensures reliable setting behavior during the riveting process, while reducing the coefficient of friction, and reducing the dust in the setting tools and equipment. The rivet also needs to be easily coated in bulks to be quickly manufactured in an automated process.

Accordingly, the present invention provides a rivet according to independent claim 1 and a method for joining components by means of a rivet according to claim 10. More particularly, the rivet, notably a self-piercing rivet, comprises a head with a top surface, a shaft longitudinally extending along a longitudinal axis and a transition portion between the shaft and the head. The rivet is integrally made in a metal material and comprises a three-layers coating adapted to prevent corrosion of said rivet. At least one projection is arranged on the top surface of the head. The presence of the at least one projection on the top surface, as claimed, prevent adhesion during the coating, , thus allowing the rivets to be easily transported and used in an automated system without impacting the rivet joint performances. The coating improves the friction coefficient and the resistance to corrosion. No additional treatment on top is needed. The at least one projection reduces the contact area (and therefore the surface contact) tremendously between two top surfaces of two different rivets when they face each other during the coating or the transport, for instance. The presence of the projection does not interfere with the setting process and parameters. More particularly, the projection may no longer be visible after the setting step. Thus, such a rivet may notably be easily and completely coated in bulks, without the risk of having completely or partially uncoated surfaces or damages to the coating due to a sticking aspect of the rivets during the coating. Indeed, for instance during a coating in bulks, if the rivet sticks together, there is a risk that no complete coating is provided to the sticked surfaces and/or a risk of damaging the coating when isolating the rivets from each other. The presence of the projection eliminates or mitigates this risk. Rivets can easily be bulk-coated in large numbers in a single charge, making manufacture less time-consuming and less costly.

In an embodiment, the outer circumference of the shaft and the head top surface are coated with the three-layers coating. For instance, in case of a hollow or semi-hollow shaft, there is no need to coat the internal surface of the shaft. Besides, the friction coefficient is of particular relevance in the area of the shaft of the rivet, and the head top surface needs to be coated in order to provide the necessary corrosion resistance.

In an embodiment, the three-layers coating comprises an electroplated coating layer, a passivation layer and a top coat layer. The zinc nickel layer is an anti-corrosion layer and the top coat layer reduces wear of friction.

In an embodiment, the electroplated coating layer is a zinc nickel layer. In an embodiment, the top coat layer is free of zinc and is applied over a water-soluble suspension.

In an embodiment, the passivation layer forms a non-metallic protection layer. For example, the passivation layer forms a nickel-free inorganic conversion layer. This will change the electrochemical corrosion potential of the coating system.

In an embodiment, the zinc nickel layer comprises a nickel content between 8 and 20%, preferably 12% to 16%. This nickel content provides a good compromise between cost and corrosion resistance.

In an embodiment, the head has a planar head upper side which defines the top surface and a head diameter DH, and wherein, according to the invention, one projection is centered on the top surface of the head. The centered projection can be easily manufactured and does not increase the manufacturing time or complexity. In an embodiment, one projection extends on the entire top surface. In an embodiment, a plurality of projections is provided and the projections are evenly distributed over the top surface. Thus, no tilting of the rivet during the setting occurs.

In an embodiment, the projection has a projection height Hp, the rivet has a rivet height Ht between a rivet foot end and the top surface, and the projection height is between 1/500 and 1/50 of the rivet head diameter. Such range allows the projection to indeed have an impact on the rivet adhesion (or sticking effect) without influencing the rivet performances during the setting.

In an embodiment, the projection has a conical, pyramidal, semi-spherical shape.

For instance, one projection is provided and the projection has a base defined by a portion of the top surface, and the base of the projection comprises a projection diameter between 1/2 and 1/10 of a head diameter. In an alternative embodiment, several projections are provided, and the projections all have a base defined by a portion of the top surface, each base comprises a projection diameter of less than 1/3 of the head diameter.

In an embodiment, the shaft is a hollow or semi-hollow shaft open at a first end and having a shaft internal diameter and a shaft external diameter, and said shaft comprises at the first end an annular cutting edge defining a cutting-edge diameter smaller than the shaft external diameter, and the shaft internal diameter merges with the annular cutting edge via a cutting-edge radius. This geometry allows good joining performances, notably for high-strength materials.

In an embodiment, the annular cutting-edge merges with the shaft external diameter via a shaft outer chamfer which is oriented at a chamfer angle.

In an embodiment, wherein the chamfer angle is of less than 45° in relation to a radial plane.

In an embodiment, the top coat layer is an organic coating, particularly an organic coating containing aluminum. In an embodiment, the top coat layer is a friction control coating layer and has a friction coefficient in a range from 0.01 to 0.19, particularly in a range from 0.08 to 0.18, and preferably in a range from 0.12 to 0.18 or in range from 0.08 to 0.13.

In an embodiment, the third coating layer is applied via a dip-spin process. The at least one projection prevents the rivets from sticking during the dip-spin process.

The present disclosure is also directed to a methos for joining components by means of a rivet which is deformed during the joining process. In an embodiment, the projection is visible before the setting step, and after the setting step, the top surface is sensibly planar. The projection is plastically deformed during the setting step.

The invention and its advantages will be better understood from the reading of the following description, given by way of example only and with reference to the accompanying drawings, of which:
Fig. 1 shows a perspective view of the rivet according to the invention;
Fig. 2 shows a side view of the rivet of Fig. 1;
Fig. 3 shows the detail III of Fig. 2;
Fig. 4 schematically shows a top surface of a rivet with a plurality of projections according to a second not claimed embodiment.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

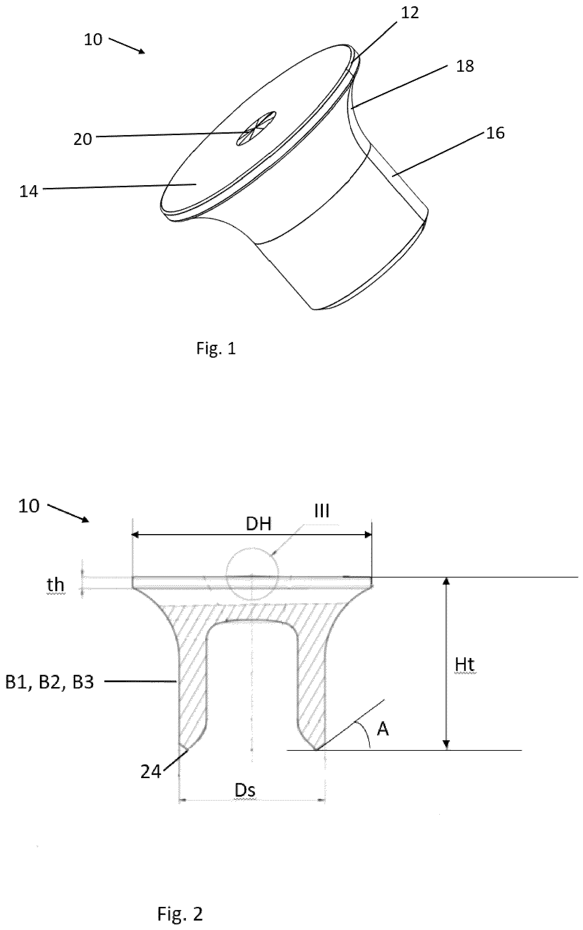

Fig. 1 and Fig. 2 show a rivet 10 adapted to join together a workpiece arrangement comprising for instance a first and a second workpiece. Fig. 1 shows more particularly a self-piercing rivet 10.

The rivet 10 comprises a head 12. The head 12 has an axial length Ih of for example 1 mm. The head 12 comprises a top surface 14. The top surface 14 may for instance be circular and have a head diameter DH. The head diameter DH may be greater than 5 mm. For instance, the head diameter DH may be 5.5 mm or 7.75mm. The head has for instance a cylindrical head outer surface and a head thickness th. The head is connected to a shaft 16 through a transition portion 18. The transition portion 18 may have a radius between 1 and 2 mm. The shaft 16 is longitudinally extending along a longitudinal axis from the transition portion 18. The transition portion 18 is arranged opposed to the top surface 14.

A projection 20 is arranged on the top surface 14. The projection 20 is depicted for instance in Fig. 2. The projection 20 is defined by a shape, which does not offer a plane surface. The projection 20 may for instance be conical. In other embodiments, the projection may be pyramidal or may have a semi-spherical shape. The base 22 of the projection 20 is defined by a portion of the top surface 14. The projection 20 may comprise a projection base diameter Dp (corresponding to the diameter of the base of the projection formed on the top surface). The projection base diameter may for instance be between 1/2 and 1/10 of the head diameter DH. More particularly, a ratio of the projection base diameter Dp to the head diameter DH may be between 0.1 and 0.3. The projection 20 defines a projection height Hp. For instance, for a head diameter of 5.5mm, the projection base diameter may be between 0.9 and 1.3mm and the projection height may be between 0.02 and 0.04 mm. For a rivet with a head diameter of 7.75 mm, the projection base diameter may be between 1.2 and 1.6 mm and the projection height may be between 0.02 and 0.04 mm. More generally, the projection height Hp may be between 1/500 and 1/50 of the rivet head diameter.

More generally, the rivet 10 may have more than one projection 20.

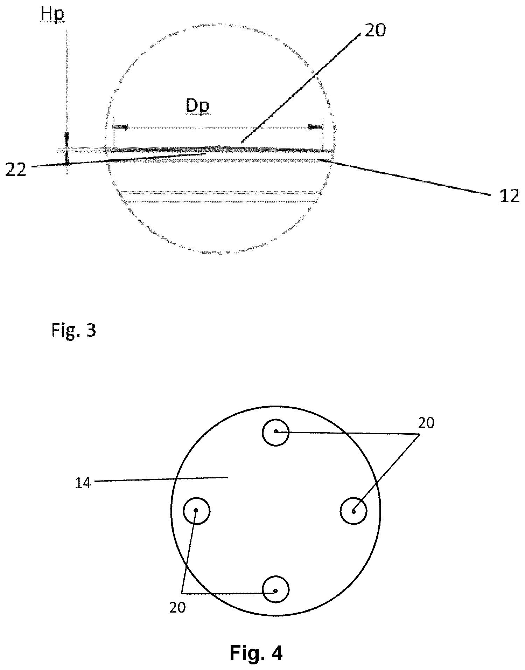

Fig. 4 schematically shows the top surface of a rivet 10 with four projections 20, according to a not claimed embodiment. The projections 20 are for instance identical. In other embodiments, the projections may be different. As depicted in Fig. 4, the four projections are regularly distributed on the top surface. More particularly, the rivet 10 may have a plurality of projections 20 and the projections 20 are arranged on the top surface in such a way that a tilting of the rivet during the setting step is avoid. For instance, the plurality of projections is regularly or evenly distributed over the top surface or the plurality of projection is arranged in a manner that a balance is created on the top surface, avoiding tilting during the setting step.

The rivet 10 is made integrally in a metal material. The rivet is preferably from a unitary metal material, particularly steel. The rivet 10 is for instance made of 37MnB4. The rivet may have a hardness in a range from 220 ± 30 HV10 to 590 ± 30 HV10, particularly in a range from 380 ± 30 HV10 to 510 ± 30 HV10, measured as a Vickers hardness. The hardness may be in a range from below H0 to H6.

The rivet 10 defines a rivet height or rivet length Ht. For instance the rivet length Ht is defined between the rivet foot end and the top surface 14. The projection height Hp is for instance between 1/500 and 1/100 of the rivet height Ht.

As depicted in the figures, the shaft 16 may be a hollow or semi-hollow shaft open at a first end and having a shaft internal diameter and a shaft external diameter Ds. The shaft 16 may have an outer diameter between 3 and 6 millimeters. The internal diameter of the shaft 16 is smaller than the external diameter Ds. The shaft 16 may comprise at the first end an annular cutting edge 24 defining a cutting-edge diameter smaller than the shaft external diameter Ds. The shaft internal diameter merges with the annular cutting edge via a cutting-edge radius. The annular cutting-edge 24 may merge with the shaft external diameter Ds via a shaft outer chamfer which is oriented at a chamfer angle A. The chamfer angle A is for instance of less than 45 degrees. In other embodiment, other rivet shapes and more particularly self-piercing rivet shapes may be provided.

If the rivet 10 is driven into a workpiece arrangement formed by stacked components, it pierces with its annular cutting edge into the upper component and, during the further joining process, the shaft fully penetrates the upper component. When the shaft enters the lower component, the lower surface of the lower component comes into contact with the bottom of the die, so as to create a reaction force. As a result, the hollow shaft of the rivet opens in a ring shape in the lower component without penetrating the lower component.

The rivet 10 comprises a three-layers coating B1, B2, B3 adapted to prevent corrosion and better control the friction.

The first coating layer B1 is for instance an electroplated coating layer. In other words, the first coating layer B1 is provided on the rivet body by means of electrolysis. The first coating layer may be a corrosion protection layer. For example, the first coating layer is a zinc nickel layer. In other embodiment, the first coating layer B1 may be a zinc-based coating or a nickel-based coating or a copper-based coating. For example, the first coating layer is made of at least one material which is selected from the group which comprises: Zn, a Zn alloy, ZnNi, Ni, a Ni alloy, NiP, NiW, Cu, a Cu alloy, CuNi, , etc. The first coating layer may have a thickness in a range from 3 µm to 12 µm, particularly in a range from 5 µm to 10 µm.

The second coating layer B2 is a passivation layer. The second coating layer B2 is provided on top of the first coating layer B1 by a passivation process. The passivation layer forms a non-metallic layer, for instance a non-metallic conversion layer. The passivation layer is for example a nickel-free inorganic conversion layer. The passivation layer provided on top of the base coating by a passivation process has a thickness which is preferably in a range from 50 nm to 400 nm. The passivation process is preferably a chemical process for reducing the reactivity of this layer and for delaying white rust formation or corrosion of the base coating.

The third coating layer B3 is a friction control layer or a top coat layer. The third coating layer B3 is arranged on top of the passivation layer. The third layer controls the friction value, but also improves corrosion resistance, chemical resistance against acids, and acts as another isolation layer. The third coating layer is for instance applied via a dip-spin process. For instance, the rivet with the first and second coating layers is placed in a meshed basket. The mesh basket is then submerged into the coating solution. In a subsequent step, the mesh basket is removed from the coating solution and spun to remove any coating solution excess on the rivet. A plurality of rivets is coated during the dip-spin process. The projection allows notably during said dip-spin process to avoid the rivets to stick which each other, and notably that two different rivets stick to each other, which would for instance prevent a correct coating of the rivet surfaces. The third coating layer has friction control properties. It might be a lubricant only to ensure a correct friction behavior and electrical conductivity. The third coating layer B3 can also for instance be nickel-free.. The third coating layer B3 is an organic coating, particularly an organic coating containing aluminum. Particularly, it is preferred if the third coating layer B3 is made of at least one material which is selected from the group which comprises: Magni B18, Torque'N'Tension, Microgleit DF 921, etc. Magni B18 is a well-known top coat. The same applies to the other above-listed coating materials of other manufacturers. The third coating layer B3 has for example a friction coefficient in a range from 0.07 to 0.19, particularly in a range from 0.08 to 0.18, preferably in a range from 0.12 to 0.18 or in a range from 0.08 to 0.13. The third coating layer B3 may have a thickness in a range from 1 µm to 6 µm, particularly in a range from 2 µm to 4 µm.

The coating is provided preferably on the entire surface of the rivet 10, although it is generally possible to provide the coating only in certain areas of the surface. Particularly, it is preferred if at least the outer circumference of the shaft 16 and the head top surface 14 are coated, because the friction coefficient is of particular relevance in the area of the shaft of the rivet, and because the head top surface needs to be coated in order to provide the necessary corrosion resistance. Preferably, a head underside radius and/or an annular cutting edge of the shaft and/or an annular radial end surface of the shaft are coated as well.

The coating having a sticky finish, the projection 20 prevents risks of adhesion or sticking between rivets. The projection 20 is easily manufactured during the manufacturing process of the rivet. Its shape and geometry do not influence the joining performance of the rivet, but sensibly increase its handling, storage and its use in automated processes. More particularly, the at least one projection, on the top surface, prevents the presence of a large plane surface more prone to sticking.
rivet 10
head 12
axial length Ih
top surface 14
head diameter DH
head thickness th
shaft 16
transition portion 18
projection 20
base 22
projection base diameter Dp
projection height Hp
rivet height or rivet length Ht
shaft external diameter Ds
annular cutting edge 24
three-layers coating B1, B2, B3

## Claims

1. Rivet (10) for a riveted connection, in particular self-piercing rivet, comprising:
- a head (12) with a top surface (14),
- a shaft (16) longitudinally extending along a longitudinal axis,
- a transition portion (18) between the shaft and the head,
wherein the rivet (10) is integrally made in a metal material and comprises a coating (B1, B2, B3) adapted to prevent corrosion of said rivet, and wherein at least one projection (20) is arranged on the top surface (14) of the head and **characterized in that** the at least one projection being centered on the top surface of the head and adapted to be plastically deformed during a rivet setting step.

2. Rivet (10) according to claim 1, wherein the coating is a three-layers coating, and wherein the outer circumference of the shaft and the head top surface are coated with the three-layers coating (B1, B2, B3).

3. Rivet (10) according to claim 2, wherein the three-layers coating (B1, B2, B3) comprises an electroplated coating layer, a passivation layer and a top coat layer.

4. Rivet (10) according to claim 3, wherein the electroplated coating layer is a zinc nickel layer.

5. Rivet (10) according to claim 4, wherein the zinc nickel layer comprises a nickel content between 8 and 20%, preferably 12% to 16%.

6. Rivet (10) according to any of claims 2 to 5, wherein the third coating layer is a top coat layer, and wherein the top coat layer is an organic coating, particularly an organic coating containing aluminum.

7. Rivet (10) according to any of claims 2 to 6, wherein the third coating layer is applied via a dip-spin process.

8. Rivet (10) according to any of claims 1 to 7, wherein the top coat layer is a friction control coating layer and has a friction coefficient in a range from 0.01 to 0.19, particularly in a range from 0.08 to 0.18, and preferably in a range from 0.12 to 0.18 or in range from 0.08 to 0.13.

9. Rivet (10) according to any of claims 1 to 8, wherein the projection (20) has a projection height Hp, wherein the rivet has a head diameter DH, and wherein the projection height Hp is between 1/500 and 1/50 of the rivet head diameter DH.

10. Rivet (10) according to any of claims 1 to 9, wherein the rivet comprises a plurality of projections (20) which are regularly distributed over the top surface.

11. Method for joining components by means of a rivet (10) which is deformed during the joining process, comprising the following steps:
- providing a rivet according to any of claims 1 to 10,
- providing a workpiece arrangement with components,
- automatically setting the rivet within the workpiece arrangement.

12. Method according to claim 11, wherein the at least one projection (20) is plastically deformed during the setting step.

## Patentansprüche

1. Niet (10) für eine Nietverbindung, insbesondere selbststanzender Niet, umfassend:
- einen Kopf (12) mit einer Oberseite (14),
- einen Schaft (16), der sich in Längsrichtung entlang einer Längsachse erstreckt,
- einen Übergangsabschnitt (18) zwischen dem Schaft und dem Kopf,
wobei der Niet (10) integral aus einem Metallwerkstoff hergestellt ist und eine Beschichtung (B1, B2, B3) umfasst, die so angepasst ist, dass sie Korrosion des Niets verhindert, und wobei mindestens ein Vorsprung (20) auf der Oberseite (14) des Kopfes angeordnet ist, und **dadurch gekennzeichnet, dass** der mindestens eine Vorsprung auf der Oberseite des Kopfes zentriert ist und so angepasst ist, dass er während eines Nietsetzungsschritts plastisch verformt werden kann.

2. Niet (10) nach Anspruch 1, wobei es sich bei der Beschichtung um eine dreilagige Beschichtung handelt, und wobei der Außenumfang des Schaftes und die Oberseite des Kopfes mit der dreilagigen Beschichtung (B1, B2, B3) beschichtet sind.

3. Niet (10) nach Anspruch 2, wobei die dreischichtige Beschichtung (B1, B2, B3) eine galvanisch aufgebrachte Beschichtungsschicht, eine Passivierungsschicht und eine Deckschicht umfasst.

4. Niet (10) nach Anspruch 3, wobei die galvanisch aufgebrachte Beschichtungsschicht eine Zink-Nickel-Schicht ist.

5. Niet (10) nach Anspruch 4, wobei die Zink-Nickel-Schicht einen Nickelgehalt zwischen 8 und 20 %, vorzugsweise 12 % bis 16 % umfasst.

6. Niet (10) nach einem der Ansprüche 2 bis 5, wobei die dritte Beschichtungsschicht eine obere Beschichtungsschicht ist, und wobei die obere Beschichtungsschicht eine organische Beschichtung, insbesondere eine aluminiumhaltige organische Beschichtung ist.

7. Niet (10) nach einem der Ansprüche 2 bis 6, wobei die dritte Beschichtungsschicht über einen Tauch-Schleuder-Prozess aufgebracht wird.

8. Niet (10) nach einem der Ansprüche 1 bis 7, wobei die obere Beschichtungsschicht eine Reibungskontrollbeschichtungsschicht ist und einen Reibungskoeffizienten in einem Bereich von 0,01 bis 0,19, insbesondere in einem Bereich von 0,08 bis 0,18 und vorzugsweise in einem Bereich von 0,12 bis 0,18 oder im Bereich von 0,08 bis 0,13 aufweist.

9. Niet (10) nach einem der Ansprüche 1 bis 8, wobei der Vorsprung (20) eine Vorsprungshöhe Hp aufweist, wobei der Niet einen Kopfdurchmesser DH aufweist, und wobei die Vorsprungshöhe Hp zwischen 1/500 und 1/50 des Nietkopfdurchmessers DH beträgt.

10. Niet (10) nach einem der Ansprüche 1 bis 9, wobei der Niet eine Vielzahl von Vorsprüngen (20) umfasst, die regelmäßig über die Oberseite verteilt sind.

11. Verfahren zum Verbinden von Komponenten mittels eines Niets (10), der sich während des Verbindungsprozesses verformt, umfassend die folgenden Schritte:
- Bereitstellen eines Niets nach einem der Ansprüche 1 bis 10,
- Bereitstellen einer Werkstückanordnung mit Komponenten,
- automatisches Setzen des Niets innerhalb der Werkstückanordnung.

12. Verfahren nach Anspruch 11, wobei der mindestens eine Vorsprung (20) während des Setzschritts plastisch verformt wird.

## Revendications

1. Rivet (10) pour une liaison rivetée, notamment rivet auto-perceur, comprenant :
- une tête (12) avec une surface supérieure (14),
- un arbre (16) s'étendant longitudinalement le long d'un axe longitudinal,
- une partie de transition (18) entre l'arbre et la tête,
dans lequel le rivet (10) est intégralement fabriqué en un matériau métallique et comprend un revêtement (B1, B2, B3) adapté pour empêcher la corrosion dudit rivet, et dans lequel au moins une saillie (20) est disposée sur la surface supérieure (14) de la tête et **caractérisé en ce que** l'au moins une saillie est centrée sur la surface supérieure de la tête et adaptée pour être plastiquement déformée lors d'une étape de pose de rivet.

2. Rivet (10) selon la revendication 1, dans lequel le revêtement est un revêtement à trois couches, et dans lequel la circonférence extérieure de l'arbre et la surface supérieure de tête sont revêtues du revêtement à trois couches (B1, B2, B3).

3. Rivet (10) selon la revendication 2, dans lequel le revêtement à trois couches (B1, B2, B3) comprend une couche de revêtement électroplaquée, une couche de passivation et une couche de finition.

4. Rivet (10) selon la revendication 3, dans lequel la couche de revêtement électroplaquée est une couche de zinc-nickel.

5. Rivet (10) selon la revendication 4, dans lequel la couche de zinc-nickel comprend une teneur en nickel comprise entre 8 et 20 %, de préférence 12 % à 16 %.

6. Rivet (10) selon l'une quelconque des revendications 2 à 5, dans lequel la troisième couche de revêtement est une couche de finition, et dans lequel la couche de finition est un revêtement organique, en particulier un revêtement organique contenant de l'aluminium.

7. Rivet (10) selon l'une quelconque des revendications 2 à 6, dans lequel la troisième couche de revêtement est appliquée par un procédé de trempage-centrifugation.

8. Rivet (10) selon l'une quelconque des revendications 1 à 7, dans lequel la couche de finition est une couche de revêtement de contrôle de friction et présente un coefficient de friction compris dans une plage entre 0,01 et 0,19, en particulier dans une plage entre 0,08 et 0,18, et de préférence dans une plage entre 0,12 et 0,18 ou dans une plage entre 0,08 et 0,13.

9. Rivet (10) selon l'une quelconque des revendications 1 à 8, dans lequel la saillie (20) présente une hauteur de saillie Hp, dans lequel le rivet présente un diamètre de tête DH, et dans lequel la hauteur de saillie Hp est comprise entre 1/500 et 1/50 du diamètre de tête de rivet DH.

10. Rivet (10) selon l'une quelconque des revendications 1 à 9, dans lequel le rivet comprend une pluralité de saillies (20) qui sont régulièrement réparties sur la surface supérieure.

11. Procédé d'assemblage de composants au moyen d'un rivet (10) qui est déformé au cours du processus d'assemblage, comprenant les étapes suivantes :
- fourniture d'un rivet selon l'une quelconque des revendications 1 à 10,
- fourniture d'un agencement de pièces avec des composants,
- pose automatique du rivet dans l'agencement de pièces.

12. Procédé selon la revendication 11, dans lequel l'au moins une saillie (20) est plastiquement déformée pendant l'étape de pose.
